(19) Europäisches Patentamt
European Patent Office
Office européen des brevets

(11) **EP 4 002 064 A1**

(12) **EUROPEAN PATENT APPLICATION**

(43) Date of publication:
**25.05.2022 Bulletin 2022/21**

(21) Application number: **20208500.7**

(22) Date of filing: **18.11.2020**

(51) International Patent Classification (IPC):
***G06F 3/01*** *(2006.01)*

(52) Cooperative Patent Classification (CPC):
**G06F 3/017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **XRSpace CO., LTD.**
**Taoyuan City 330 (TW)**

(72) Inventor: **TAI, Yu-Feng**
**204 Keelung City (TW)**

(74) Representative: **Emde, Eric**
**Wagner & Geyer Partnerschaft mbB**
**Patent- und Rechtsanwälte**
**Gewürzmühlstrasse 5**
**80538 München (DE)**

(54) **METHOD AND SYSTEM FOR SHOWING A CURSOR FOR USER INTERACTION ON A DISPLAY DEVICE**

(57) A method and a system (100) for showing a cursor for user interaction on a display device are provided. A reference position (R, P0) initialized at the end of a ray cast (305) is determined. A target position (AI, A2, A3, A4), which moves with a human body portion of a user (303), is determined. The target position (AI, A2, A3, A4) is different from the reference position (R, P0). A modified position (M) is determined based on the reference position (R, P0) and the target position (AI, A2, A3, A4). The modified position (M) is different from the target position (AI, A2, A3, A4). The modified position (M) is used as the current position of the cursor. The modified position (M) represents a position of the end of the ray cast (305) emitted from the user side currently. Accordingly, the cursor may be steady in the extended reality.

FIG. 2

## Description

TECHNICAL FIELD

The present disclosure generally relates to interactions in extended reality (XR), in particular, to a method and a system for showing a current position for user interaction on a display device in the XR.

BACKGROUND

Extended reality (XR) technologies for simulating senses, perception, and/or environment, such as virtual reality (VR), augmented reality (AR) and mixed reality (MR), are popular nowadays. The aforementioned technologies can be applied in multiple fields, such as gaming, military training, healthcare, remote working, etc. In the XR, a user may interact with one or more objects and/or the environment. In general, the user may use his/her hands or a controller to change the field of view in the environment or to select a target object.

However, in the conventional approaches, the accuracy for showing a cursor for user interaction on a display device pointed by the user on the target object may be influenced by the swinging or shaking of the human body of the user or other factors. If the sensitivity for tracking the hands of the user or the controller is too high, the cursor may drift frequently because of the unsteadiness of the hands. On the other hand, if the sensitivity for tracking the hands of the user or the controller is too low, the cursor may be too slow for responding and inaccurated in most of time.

SUMMARY

Accordingly, the present disclosure is directed to a method and a system for showing a cursor for user interaction on a display device, to make the position of the cursor steady.

In one of the exemplary embodiments, a method for showing a cursor for user interaction on a display device includes, but is not limited to, the following steps. A reference position is determined. The reference position is initialized at the end of a ray cast emitted from the user side. A target position is determined. The target position is moved with the human body portion of the user. The target position is different from the reference position. A modified position is determined based on the reference position and the target position, where the reference position, the target position, and the modified position are located on the same plane parallel with the user side. The modified position is different from the target position. The modified position is used as the current position of the cursor, where the modified position represents the position of the end of the ray cast emitted from the user side currently.

In one of the exemplary embodiments, a system for showing a current position for user interaction on a display device includes, but is not limited to, a motion sensor, a memory, and a processor. The motion sensor is used for detecting the motion of a human body portion of a user. The memory is used for storing program code. The processor is coupled to the motion sensor and the memory and loading the program code to perform the following steps. A reference position is determined. The reference position is initialized at the end of a ray cast emitted from the user side. A target position is determined. The target position is moved with the human body portion of the user. The target position is different from the reference position. A modified position is determined based on the reference position and the target position, where the reference position, the target position, and the modified position are located on the same plane parallel with the user side. The modified position is different from the target position. The modified position is used as the current position of the cursor, where the modified position represents the position of the end of the ray cast emitted from the user side currently.

In light of the foregoing, according to the method and the system for showing the cursor for user interaction on the display device provided in one or more embodiments, not only the target position, the reference position would also be used as a reference to determine the positions of the cursor. Accordingly, the cursor would be steady and has a quick response for the motion of the human body portion.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1 is a block diagram illustrating a system for showing a cursor for user interaction on a display device according to one of the exemplary embodiments of the disclosure.

FIG. 2 is a flowchart illustrating a method for showing a cursor for user interaction on a display device according to one of the exemplary embodiments of the disclosure.

FIG. 3 is a schematic diagram illustrating the generation of the target point according to one of the exemplary embodiments of the disclosure.

FIG. 4 is a top view schematic diagram illustrating vectors according to one of the exemplary embodiments of the disclosure.

FIG. 5 is a flowchart illustrating the determination of the modified position according to one of the exemplary embodiments of the disclosure.

FIG. 6 is a schematic diagram illustrating a tolerance area according to one of the exemplary embodiments of the disclosure.

FIG. 7 is an example illustrating that the target position is located within the tolerance area.

FIG. 8 is an example illustrating that the target position is not located within the tolerance area.

DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

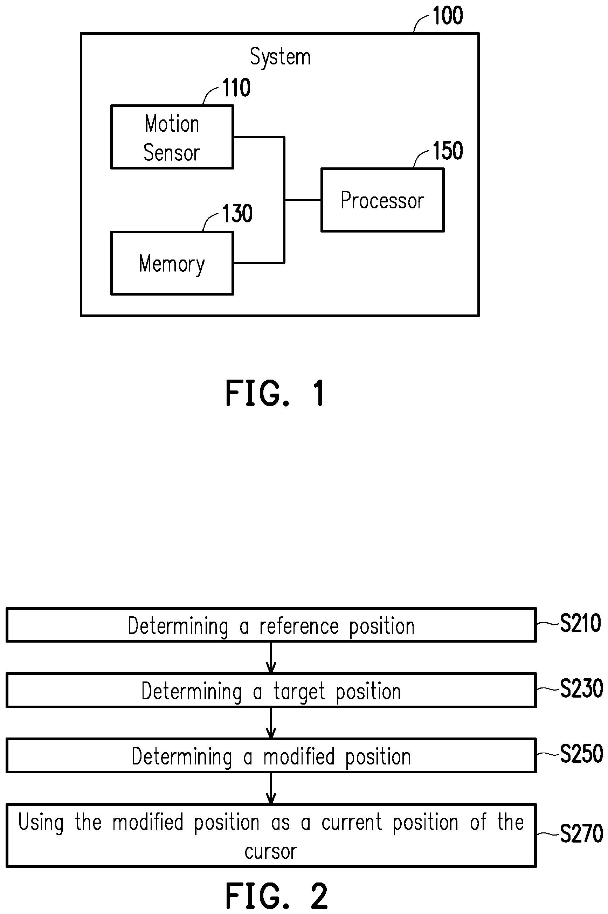

FIG. 1 is a block diagram illustrating a system 100 for showing a cursor for user interaction on a display device according to one of the exemplary embodiments of the disclosure. Referring to FIG. 1, the system 100 includes, but not limited to, one or more motion sensors 110, a memory 130, and a processor 150. The system 100 is adapted for XR, or other reality simulation related technology.

The motion sensor 110 may be an accelerometer, a gyroscope, a magnetometer, a laser sensor, an inertial measurement unit (IMU), an infrared ray (IR) sensor, an image sensor, a depth camera, or any combination of aforementioned sensors. In one embodiment, the motion sensor 130 is used for sensing the motion of a user's human body portion (e.g., fingers, hands, legs, or arms), to generate motion sensing data sensed by the motion sensor 110 (e.g. camera images, sensed strength values, etc.). For one example, the motion-sensing data comprises a 3-degree of freedom (3-DoF) data, and the 3-DoF data is related to the rotation data of the user's hand in three-dimensional (3D) space, such as accelerations in yaw, roll, and pitch. For another example, the motion-sensing data comprises a 6-degree of freedom (6-DoF) data. Comparing with the 3-DoF data, the 6-DoF data is further related to the displacement of the user's hand in three perpendicular axes, such as accelerations in surge, heave, and sway. For another example, the motion-sensing data comprises a relative position and/or displacement of the user's leg in the 2D/3D space. In some embodiments, the motion sensor 130 could be embedded in a handheld controller or a wearable apparatus acted with the user's human body portion, such as glasses, an HMD, or the likes.

The memory 130 may be any type of a fixed or movable random-access memory (RAM), a read-only memory (ROM), a flash memory, a similar device, or a combination of the above devices. The memory 130 records program codes, device configurations, buffer data, or permanent data (such as motion sensing data, positions, tolerance area, spacing, or weighted relation), and these data would be introduced later.

The processor 150 is coupled to the motion sensor 110 and the memory 130. The processor 150 is configured to load the program codes stored in the memory 130, to perform a procedure of the exemplary embodiment of the disclosure.

In some embodiments, the processor 150 may be a central processing unit (CPU), a microprocessor, a microcontroller, a graphics processing unit (GPU), a digital signal processing (DSP) chip, a field-programmable gate array (FPGA). The functions of the processor 150 may also be implemented by an independent electronic device or an integrated circuit (IC), and operations of the processor 150 may also be implemented by software.

In one embodiment, an HMD or digital glasses (i.e., a display device) includes the motion sensor 110, the memory 130, and the processor 150. In some embodiments, the processor 150 may not be disposed at the same apparatus with the motion sensor 110. However, the apparatuses respectively equipped with the motion sensor 110 and the processor 150 may further include communication transceivers with compatible communication technology, such as Bluetooth, Wi-Fi, and IR wireless communications, or physical transmission line, to transmit or receive data with each other. For example, the processor 150 may be disposed in an HMD while the motion sensor 110 is disposed at a controller outside the HMD. For another example, the processor 150 may be disposed in a computing device while the motion sensor 110 being disposed outside the computing device.

In some embodiments, the system 100 further includes a display usch as LCD, LED display, or OLED display.

To better understand the operating process provided in one or more embodiments of the disclosure, several embodiments will be exemplified below to elaborate the operating process of the system 100. The devices and modules in the system 100 are applied in the following embodiments to explain the method for showing a current position for user interaction on the display device provided herein. Each step of the method can be adjusted according to actual implementation situations and should not be limited to what is described herein.

FIG. 2 is a flowchart illustrating a method for showing a current position for user interaction on a display device according to one of the exemplary embodiments of the disclosure. Referring to FIG. 2, the processor 150 may determine a reference position (step S210). Specifically, the reference position is initialized at the end of a ray cast emitted from the user side. The user may use his human body portion (such as finger, hand, head, or leg) or the controller held by the human body portion to aim at a target object in the XR. The processor 150 may determine the position of the human body portion or the position of the controller in the 3D space based on the motion of the human body portion of the user detected by the motion sensor 110. If the gesture of the user's hand is conformed to the predefined gesture for aiming object, the controller held by the human body portion moves, or other trigger conditions happens, a ray cast would be formed and emitted from the user side, such as the user's body portion, the user's eye, the motion sensor 110, or a portion of the HMD. The ray cast may pass through the human body portion or the controller and further extend along with a straight line or a curve. If the ray cast collides with any object which are allowed to be pointed by the user in the XR, a target point would be located at the end of the ray cast where the end of the ray cast is located on the collided object.

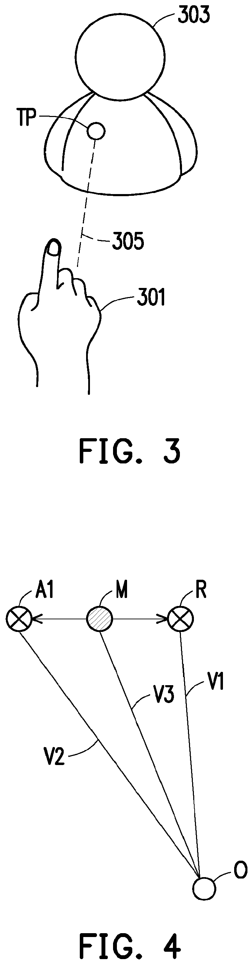

For example, FIG. 3 is a schematic diagram illustrating the generation of the target point according to one of the exemplary embodiments of the disclosure. Referring to FIG. 3 as one embodiment of the disclosure, the one index finger up gesture of the user's hand 301 is conformed to the predefined gesture for aiming object, and the ray cast 305 emitted from the user's eye via the user's hand 301 is generated. A target point TP would be located at the end of the ray cast 305, and a cursor would be presented on the display based on the target point TP. If the user moves his/her hand 301, the target point TP and the cursor also correspondingly move.

When the target point is generated and stays for a while (for example, 500 microseconds, 1 second, or 2 seconds), the processor 150 may record the initial position of the target point as the reference position in the XR at an initial time point. The form of the position may be the coordinates in three axes or a relative relation of other objects. If the target point does not move for a time duration (for example, 1 second, 3 seconds, or 5 seconds), the processor 150 may use the reference position to represent the current position of the cursor or the position of the end of the ray cast.

The processor 150 may determine a target position (step S230). Specifically, the human body portion may shake or swing, so the position of the target point may move out of the reference position at a subsequent time point after the initial time point. In this embodiment, if the target point is not located at the reference position, the position of the target point would be called as the target position. That is, the target position is different from the reference position. The target position would move with the human body portion or the controller hold by the human body portion. For example, the hand of the user moves from the center to the right side, and the target position would also move from the center to the right side.

The processor 150 may determine a modified position based on the reference position and the target position (step S250). Specifically, in the conventional approaches, the current position of the cursor located at the end of the ray cast would be determined as the target position of the target point. However, the current position of the cursor merely based on the motion of the human body portion may not be steady. In this embodiment, the current position of the cursor would not be the target position of the target point. The reference position, the target position, and the modified position are all located on the same plane parallel with the user side, and the modified position is different from the target position.

In one embodiment, the processor 150 may determine the modified position based on a weighted relation of the target position and the reference position. Specifically, the sum of weights of the target position and the reference position is one, and the weight of the target position is not one. For example, if the weight of the target position (located at coordinates (0,0)) is 0.3 and the weight of the reference position (located at coordinates (10, 10)) is 0.7, the modified position would be located at coordinates (7, 7). That is, the weighted calculated result (i.e., the weighted relation) of the target position and the reference position with corresponding weights is the modified position.

To calculate the modified position, in one embodiment, the processor 150 may generate an original point. FIG. 4 is a top view schematic diagram illustrating vectors V1, V2, and V3 according to one of the exemplary embodiments of the disclosure. Referring to FIG. 4, a first vector V1 is formed from an original position O of the original point to the reference position R, and a second vector V2 is formed from the original position O to the target position A1. The processor 150 may determine a third vector V3 formed from the original position O to the modified position M of the target point based on the first vector V1, the second vector V2, and the weighted relation of the first vector V1 and the second vector V2. The function of the third vector is:

$$V3 = \alpha V1 + \beta V2...(1),$$

where $\alpha$ is the weight of the first vector V1 or the reference position R, $\beta$ is the weight of the second vector V2 or the target position A1, and $\alpha + \beta = 1$. Then, the modified position M is determined based on the third vector V3. The function of the modified position M is:

$$\overrightarrow{OM} = V3...(2)$$

It should be noticed that the target position A1, the modified position M, and the reference position R are located on the same plane. That is, a straight line, which is connected between the target position A1 and the reference position R, would also pass through the modified position M.

In one embodiment, the weights of the current position and the reference position in the weighted relation (for example, weight $\alpha$ for the reference position and weight $\beta$ for the target position) vary based on the accuracy requirement of the current position. For example, the accuracy requirement may be adapted for typing a keyboard, the weight $\alpha$ may be larger than the weight $\beta$. For another example, the accuracy requirement may be adapted for grasping a large object in the XR, the weight $\beta$ may be larger than the weight $\alpha$. That is, the higher the accuracy requirement is, the larger the weight $\alpha$ is. The lower the accuracy requirement is, the larger the weight $\beta$ is.

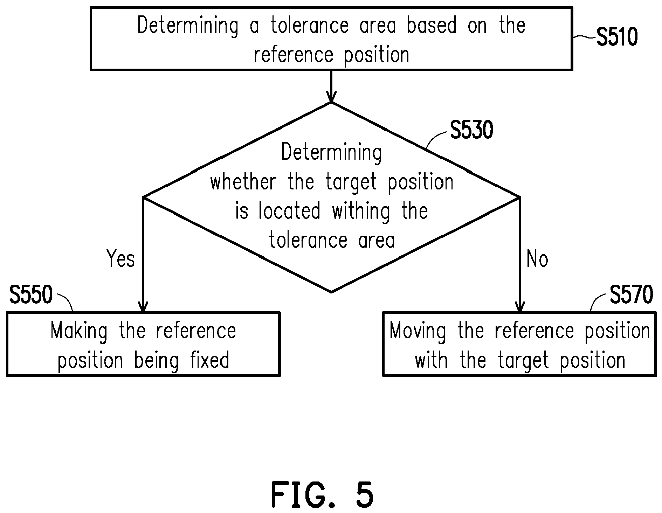

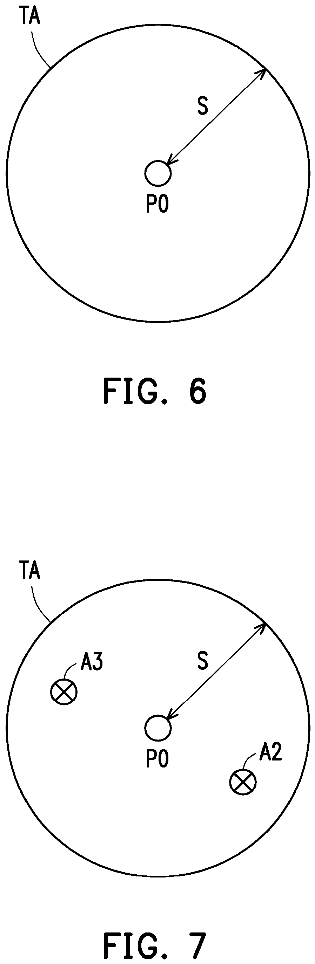

In one embodiment, the reference position may be not fixed. FIG. 5 is a flowchart illustrating the determination of the second position according to one of the exemplary embodiments of the disclosure. Referring to FIG. 5, the processor 150 may determine a tolerance area based on the initial position of the reference position (step S510). The tolerance area may be a circle, a square, or other shapes radiated from the reference position. For example, FIG. 6 is a schematic diagram illustrating a tolerance area TA according to one of the exemplary embodiments of the disclosure. Referring to FIG. 6, the tolerance area TA is a circle with radius S, and the tolerance area TA is radiated from the reference position P0 of the target point.

At first, the reference position is fixed. Then, the processor 150 may determine whether the target position of the target point is located within the tolerance area (step S530). For example, the processor 150 may determine whether the coordinates of the target position is overlapped with the tolerance area. For another example, the processor 150 may calculate the distance between the target position and the reference position and the distance between the edge of the tolerance area and the reference position, and determine which distance is larger than the other.

FIG. 7 is an example illustrating that the current position is located within the tolerance area TA. Referring to FIG. 7, the target positions A2 and A3 are both located within the tolerance area TA where the radius S is larger than the distance from the reference position P0 to the current position A2 or A3.

In one embodiment, the processor 150 may make the reference position fixed if the target position of the target point is located within the tolerance area (step S550). Specifically, the tolerance area would be considered as an area that allows part of variations of the current position. These variations of the target position may be caused by the shaking, swinging, or other small-scale motions of the human body portion of the user. If the variations of the target position do not exceed the tolerance area, the processor 150 may consider that the user still intends to point around the reference position. Therefore, the modified position may stay within the tolerance area based on the aforementioned weighted relation.

In some embodiments, if the target position of the target point is located within the tolerance area, the processor 150 may determine the modified as the reference position. For example, the weight $\alpha$ of the reference position is one, and the weight of the target position is zero. Taking FIG. 7 as an example, the modified position corresponding to the target positions A2 and A3 would be the reference position P0.

In some embodiments, the size and/or the shape of the tolerance area may relate to the accuracy requirement of the current position of the target point, such as the selection of a smaller object or a larger object.

In one embodiment, the target position of the target point is not located within the tolerance area. If the variations of the target position exceed the tolerance area, the processor 150 may consider that the user may not intend to point at the reference position. However, the modified position is still not the target position. Instead, the reference position may move from the initial position, and the displacement and the direction of the motion of the reference position would be the same as the target position. That is, the reference position moves with the target position. When the target position just moves out of the tolerance area, the reference position would be located on a straight line connected to the initial position and the current position. Furthermore, there is a spacing between the current position and the reference position.

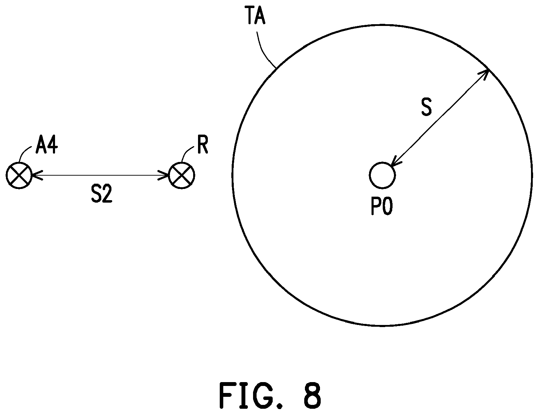

For example, FIG. 8 is an example illustrating that the target position A4 is not located within the tolerance area TA. Referring to FIG. 8, the target position A4 is not located within the tolerance area TA where the radius S is less than the distance from the initial position of the reference position P0 to the target position A4. Furthermore, there is a spacing S2 between the target position A4 and the reference position R. Then, the modified position would be determined based on the target position and the modified reference position.

In one embodiment, the spacing between the target position and the reference position is the same as a distance between the reference position and the edge of the tolerance area. Taking FIG. 8 as an example, the spacing S2 equals the radius S. In some embodiments, the spacing may be different from the distance between the reference position and the edge of the tolerance area.

In one embodiment, the spacing is fixed. In another embodiment, the spacing varies based on the speed of the motion of the human body portion which triggers the motion of the ray cast. For example, if the speed of the human body portion/ ray cast is faster relative to a speed threshold, the spacing may be enlarged. If the speed is slower, the spacing may be shortened. In some embodiments, the spacing varies based on the distance between the current position and the reference position. For example, the distance between the current position and the reference position is longer relative to a distance threshold, the spacing may be enlarged. If the speed is shorter, the spacing may be shortened.

If the modified position is determined based on one or more of the embodiments of FIG. 4-FIG. 8, the processor 150 may use the modified position as the current position of the cursor (step S270). That is, the modified position, which represents the position of the end of the ray cast currently, is a modification of the target position. Then, the cursor would be shown on the display device at the modified position but not the target position.

In summary, the exemplary embodiments described above depicted the method and the system for showing the cursor for user interaction on the display device. The modified position may be determined based on the weighted relation of the reference position and the target position. In addition, the reference position may move with the target position if the target position is located out of the tolerance area. Accordingly, the current position of the cursor would be steady.

**Claims**

1.  A method for showing a cursor for user interaction on a display device, **characterized by** comprising:

    determining a reference position (R, P0), wherein the reference position (R, P0) is initialized at an end of a ray cast (305) emitted from a user side;
    determining a target position (A1, A2, A3, A4), wherein the target position (A1, A2, A3, A4) is moved with a human body portion of a user (303), and the target position (A1, A2, A3, A4) is different from the reference position (R, P0);
    determining a modified position (M) based on the reference position (R, P0) and the target position (A1, A2, A3, A4), wherein the reference position (R, P0), the target position (A1, A2, A3, A4), and the modified position (M) are located on the same plane parallel with the user side, and the modified position (M) is different from the target position (A1, A2, A3, A4); and
    using the modified position (M) as a current position of the cursor, wherein the modified position (M) represents a position of the end of the ray cast (305) currently.

2.  A system (100) for showing a cursor for user interaction on a display device, comprising:

    a motion sensor (110), detecting a motion of a human body portion of a user (303); and
    a memory (130), storing a program code; and
    a processor (150), coupled to the motion sensor (110) and the memory (130), and **characterized in that** the processor (150) loads the program code to perform:

        determining a reference position (R, P0), wherein the reference position (R, P0) is initialized at an end of a ray cast (305) emitted from a user side;
        determining a target position (A1, A2, A3, A4), wherein the target position (A1, A2, A3, A4) is moved with the human body portion of the user (303), and the target position (A1, A2, A3, A4) is different from the reference position (R, P0);

determining a modified position (M) based on the reference position (R, P0) and the target position (A1, A2, A3, A4), wherein the reference position (R, P0), the target position (A1, A2, A3, A4), and the modified position (M) are located on the same plane parallel with the user side, and the modified position (M) is different from the target position (A1, A2, A3, A4); and
        using the modified position (M) as a current position of the cursor, wherein the modified position (M) represents a position of the end of the ray cast (305) currently.

3.  The method of claim 1, **characterized in that** the step of determining the modified position (M) based on the reference position (R, P0) and the target position (A1, A2, A3, A4) comprises:
    determining the modified position (M) based on a weighted relation of the target position (A1, A2, A3, A4) and the reference position (R, P0), wherein a sum of weights of the target position (A1, A2, A3, A4) and the reference position (R, P0) is one, and the weight of the target position (A1, A2, A3, A4) is not one, or the system (100) of claim 2, **characterized in that** the processor (150) further performs:
    determining the modified position (M) based on a weighted relation of the target position (A1, A2, A3, A4) and the reference position (R, P0), wherein a sum of weights of the target position (A1, A2, A3, A4) and the reference position (R, P0) is one, and the weight of the target position (A1, A2, A3, A4) is not one.

4.  The method of claim 3, **characterized by** further comprising:

    generating an original point located at the user side, wherein a first vector (V1) is formed from an original position (O) of the original point to the reference position (R, P0), and a second vector (V2) is formed from the original position (O) to the target position (A1, A2, A3, A4);
    determining a third vector (V3) formed from the original position (O) to the modified position (M) based on the first vector (V1), the second vector (V2), and the weighted relation, wherein the modified position (M) is determined based on the third vector (V3), or the system (100) of claim 3, **characterized in that** the processor (150) further performs:

        generating an original point located at the user side, wherein a first vector (V1) is formed from an original position (O) of the original point to the reference position (R, P0), and a second vector (V2) is formed from the original position (O) to the target position (A1, A2, A3, A4);
determining a third vector (V3) formed from the original position (O) to the modified position (M) based on the first vector (V1), the second vector (V2), and the weighted relation, wherein the modified position (M) is determined based on the third vector (V3).

5. The method of claim 3 or the system (100) of claim 3, **characterized in that** the weights of the target position (A1, A2, A3, A4) and the reference position (R, P0) in the weighted relation vary based on accuracy requirement of the current position.

6. The method of claim 3, **characterized in that** the step of determining the modified position (M) based on the reference position (R, P0) and the target position (A1, A2, A3, A4) comprises:

   determining a tolerance area (TA) radiated from the reference position (R, P0); and
   determining whether the target position (A1, A2, A3, A4) is located within the tolerance area (TA), or the system (100) of claim 3, **characterized in that** the processor (150) further performs:

      determining a tolerance area (TA) radiated from the reference position (R, P0); and
      determining whether the target position (A1, A2, A3, A4) is located within the tolerance area (TA).

7. The method of claim 6, **characterized in that** after the step of determining whether the target position (A1, A2, A3, A4) is located within the tolerance area (TA), the method further comprises:
   in response to the target position (A1, A2, A3, A4) being located within the tolerance area (TA), the reference position (R, P0) is fixed, or the system (100) of claim 6, **characterized in that** the processor (150) further performs:
   in response to the target position (A1, A2, A3, A4) being located within the tolerance area (TA), the reference position (R, P0) is fixed.

8. The method of claim 7 or the system (100) of claim 7, **characterized in that** the weight of the reference position (R, P0) is one, and the weight of the target position (A1, A2, A3, A4) is zero.

9. The method of claim 6, **characterized in that** after the step of determining whether the target position (A1, A2, A3, A4) is located within the tolerance area (TA), the method further comprises:
   in response to the target position (A1, A2, A3, A4) not located within the tolerance area (TA), moving the reference position (R, P0) with the target position (A1, A2, A3, A4), wherein there is a spacing (S2) between the target position (A1, A2, A3, A4) and the reference position (R, P0), or the system (100) of claim 6, **characterized in that** the processor (150) further performs:
   in response to the target position (A1, A2, A3, A4) not located within the tolerance area (TA), moving the reference position (R, P0) with the target position (A1, A2, A3, A4), wherein there is a spacing (S2) between the target position (A1, A2, A3, A4) and the reference position (R, P0).

10. The method of claim 9 or the system (100) of claim 9, **characterized in that** the spacing (S2) is fixed.

11. The method of claim 9, **characterized in that** the spacing (S2) varies based on a speed of motion of the ray cast (305), or the system (100) of claim 9, **characterized in that** the spacing (S2) varies based on a speed of the motion of the human body portion.

12. The method of claim 9 or the system (100) of claim 9, **characterized in that** the spacing (S2) is the same as a distance between an initial position of the reference position (R, P0) and an edge of the tolerance area (TA).

13. The method of claim 9 or the system (100) of claim 9, **characterized in that** the spacing (S2) is different from a distance between an initial position of the reference position (R, P0) and an edge of the tolerance area (TA).

~100

System

~110

Motion
Sensor

~130

Memory

~150

Processor

# FIG. 1

| Determining a reference position | ~S210 |

| Determining a target position | ~S230 |

| Determining a modified position | ~S250 |

| Using the modified position as a current position of the cursor | ~S270 |

# FIG. 2

303

TP

305

301

FIG. 3

A1   M   R

V1

V3

V2

O

FIG. 4

Determining a tolerance area based on the reference position — S510

Determining whether the target position is located withing the tolerance area — S530

Yes

No

S550 — Making the reference position being fixed

S570 — Moving the reference position with the target position

FIG. 5

TA

S

P0

## FIG. 6

TA

A3

S

P0

A2

## FIG. 7

FIG. 8

Europäisches
Patentamt

European
Patent Office

Office européen
des brevets

## EUROPEAN SEARCH REPORT

Application Number

EP 20 20 8500

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/226814 A1 (TANG SHENG KAI [US] ET AL) 16 July 2020 (2020-07-16)<br>* paragraph [0026] *<br>* paragraph [0041] *<br>* paragraph [0037] - paragraph [0040] *<br>----- | 1-13 | INV.<br>G06F3/01 |
| Y | US 2004/041828 A1 (ZELLHOEFER JON WILLIAM [US]) 4 March 2004 (2004-03-04)<br>* paragraph [0020] *<br>----- | 1-13 | |
| Y | US 2005/243062 A1 (LIBERTY MATTHEW G [US]) 3 November 2005 (2005-11-03)<br>* paragraph [0048] *<br>* paragraph [0052] *<br>* paragraph [0056] - paragraph [0059] *<br>----- | 1-13 | |
| Y | US 2006/109242 A1 (SIMPKINS DANIEL S [US]) 25 May 2006 (2006-05-25)<br>* paragraph [0065] *<br>----- | 1-13 | |
| Y | US 2019/228243 A1 (YAMAOKA MASAAKI [US] ET AL) 25 July 2019 (2019-07-25)<br>* claim 10; figure 5 *<br>* paragraph [0005] *<br>* paragraph [0065] *<br>----- | 1-13 | TECHNICAL FIELDS SEARCHED (IPC)<br><br>G06F |
| Y | US 2020/042170 A1 (GOULDEN SAMUEL D [GB] ET AL) 6 February 2020 (2020-02-06)<br>* paragraph [0041] - paragraph [0044] *<br>* paragraph [0050] - paragraph [0052] *<br>* paragraph [0056] - paragraph [0057] *<br>----- | 1-13 | |
| Y | US 2013/321347 A1 (KIM SEOK-JOONG [KR]) 5 December 2013 (2013-12-05)<br>* paragraph [0042] *<br>----- | 1-13 | |

-/--

The present search report has been drawn up for all claims

| Place of search | Date of completion of the search | Examiner |
|---|---|---|
| Munich | 20 April 2021 | Schneider, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 20 8500

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/038830 A1 (CLEMENT MANUEL CHRISTIAN [US] ET AL) 9 February 2017 (2017-02-09) * paragraph [0074] * ----- | 1-13 | |
| Y | US 2017/147081 A1 (KWON JI-YONG [KR]) 25 May 2017 (2017-05-25) * paragraphs [0071] - [0079] * ----- | 1-13 | |
| Y | US 10 802 600 B1 (RAVASZ JONATHAN [GB] ET AL) 13 October 2020 (2020-10-13) * column 12, line 39 - column 13, line 26 * ----- | 1-13 | |
| Y | US 2014/184501 A1 (MOON JONG-BO [KR] ET AL) 3 July 2014 (2014-07-03) * paragraph [0053] * ----- | 1-13 | |
| Y | US 2018/136744 A1 (KARLSSON PER [US] ET AL) 17 May 2018 (2018-05-17) * paragraph [0018] - paragraph [0019] * * paragraph [0021] - paragraph [0026] * ----- | 1-13 | TECHNICAL FIELDS SEARCHED (IPC) |

The present search report has been drawn up for all claims

| Place of search | Date of completion of the search | Examiner |
|---|---|---|
| Munich | 20 April 2021 | Schneider, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 8500

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2021

| Patent document cited in search report | | Publication date | Patent family member(s) | | Publication date |
|---|---|---|---|---|---|
| US 2020226814 | A1 | 16-07-2020 | US 2020226814 A1<br>WO 2020146125 A1 | | 16-07-2020<br>16-07-2020 |
| US 2004041828 | A1 | 04-03-2004 | NONE | | |
| US 2005243062 | A1 | 03-11-2005 | AT 550709 T<br>DE 202005022038 U1<br>DK 2337016 T3<br>EP 1741088 A2<br>ES 2384572 T3<br>ES 2664472 T3<br>JP 5053078 B2<br>JP 5670384 B2<br>JP 6026483 B2<br>JP 2007535776 A<br>JP 2012190479 A<br>JP 2015015058 A<br>KR 20100096257 A<br>PL 1741088 T3<br>US 2005243062 A1<br>US 2007091068 A1<br>US 2007257885 A1<br>US 2008291163 A1<br>WO 2005108119 A2 | | 15-04-2012<br>12-07-2012<br>23-04-2018<br>10-01-2007<br>09-07-2012<br>19-04-2018<br>17-10-2012<br>18-02-2015<br>16-11-2016<br>06-12-2007<br>04-10-2012<br>22-01-2015<br>01-09-2010<br>31-08-2012<br>03-11-2005<br>26-04-2007<br>08-11-2007<br>27-11-2008<br>17-11-2005 |
| US 2006109242 | A1 | 25-05-2006 | US 2006109242 A1<br>WO 2006055907 A1 | | 25-05-2006<br>26-05-2006 |
| US 2019228243 | A1 | 25-07-2019 | NONE | | |
| US 2020042170 | A1 | 06-02-2020 | US 2020042170 A1<br>US 2020042172 A1 | | 06-02-2020<br>06-02-2020 |
| US 2013321347 | A1 | 05-12-2013 | CN 103370678 A<br>EP 2677399 A2<br>KR 20120095084 A<br>US 2013321347 A1<br>WO 2012111998 A2 | | 23-10-2013<br>25-12-2013<br>28-08-2012<br>05-12-2013<br>23-08-2012 |
| US 2017038830 | A1 | 09-02-2017 | CN 107533373 A<br>EP 3332314 A1<br>JP 6676071 B2<br>JP 2018522310 A<br>KR 20170130586 A<br>US 2017038830 A1<br>WO 2017024142 A1 | | 02-01-2018<br>13-06-2018<br>08-04-2020<br>09-08-2018<br>28-11-2017<br>09-02-2017<br>09-02-2017 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**                    EP 20 20 8500

20-04-2021

| Patent document cited in search report | Publication date | Patent family member(s) | Publication date |
|---|---|---|---|
| US 2017147081 A1 | 25-05-2017 | KR 101515847 B1<br>US 2017147081 A1<br>WO 2016021830 A1 | 04-05-2015<br>25-05-2017<br>11-02-2016 |
| US 10802600 B1 | 13-10-2020 | NONE | |
| US 2014184501 A1 | 03-07-2014 | CN 103914156 A<br>EP 2753092 A1<br>JP 6474960 B2<br>JP 2014132463 A<br>US 2014184501 A1<br>WO 2014107027 A1 | 09-07-2014<br>09-07-2014<br>27-02-2019<br>17-07-2014<br>03-07-2014<br>10-07-2014 |
| US 2018136744 A1 | 17-05-2018 | CN 109906424 A<br>DE 202017006742 U1<br>EP 3542249 A1<br>JP 2020513611 A<br>KR 20190067227 A<br>US 2018136744 A1<br>WO 2018093900 A1 | 18-06-2019<br>19-02-2019<br>25-09-2019<br>14-05-2020<br>14-06-2019<br>17-05-2018<br>24-05-2018 |

EPO FORM P0459

page 2 of 2